# DEMANDE DE BREVET EUROPEEN

(11) **EP 1 302 754 A1**
(43) Date de publication de la demande: **16.04.2003**
(21) Numéro de dépôt: 02292493.0
(22) Date de dépôt: 09.10.2002
(51) Int. Cl.: G01D 5/39, G01F 15/06

(54) **Procédé et dispositif pour déterminer à distance un nombre inscrit sur le cadran d'un compteur**

(30) Priorité: 10.10.2001 FR 0113049
(71) Demandeur: Manufacture D'Appareillage Electrique de Cahors - MAEC, 46000 Cahors (FR)
(72) Inventeur: Papin, Stéphane, 46000 Cahors (FR); Annes, Michel, 46090 Larroques des Arcs (FR)
(74) Mandataire: Nicolle, Olivier

(57) **Abrégé**

Procédé pour déterminer à distance un nombre inscrit (3) sur un cadran d'un compteur (1), tel qu'un compteur d'eau, de gaz, d'électricité ou analogue, comprenant une zone d'affichage (2), caractérisé par les opérations suivantes :
- on capte l'image d'au moins une zone significative (7) de la zone d'affichage (2),
- on analyse l'image,
- on détermine s'il y a eu incrémentation du nombre inscrit (3) sur la zone d'affichage (2),
- en cas d'incrémentation, on commande l'émission d'une impulsion électrique,
- on transmet l'impulsion à des moyens (18) de calcul et de stockage,
de sorte qu'à partir du nombre d'impulsions calculées par les moyens (18) de calcul et de stockage, on déduit le nombre inscrit (3) sur la zone d'affichage (2).

## Description

La présente invention concerne un procédé pour déterminer à distance un nombre inscrit sur le cadran d'un compteur et notamment un compteur de consommation domestique tel qu'un compteur d'eau, de gaz, d'électricité ou analogue.

L'invention concerne également un dispositif d'analyse d'images et de commande d'impulsions pour la mise en oeuvre du procédé ainsi qu'un système pour déterminer à distance un nombre inscrit sur le cadran d'un compteur.

Typiquement les compteurs d'eau, de gaz ou d'électricité présentent sur leur face avant un cadran indiquant une série de chiffres correspondant à la consommation d'eau, de gaz ou d'électricité.

Afin d'établir une facture de consommation, on peut relever de façon périodique cette série de chiffres. Généralement, une personne est chargée de relever le nombre inscrit sur le cadran, compteur par compteur. Effectuer l'ensemble des relevés est une activité lente et coûteuse.

Il existe déjà des solutions pour ne pas avoir à effectuer ces relevés en se déplaçant compteur par compteur.

Une première solution est par exemple proposée dans le document FR 2 648 906 issu de la demanderesse qui décrit un capteur opto-électronique pour compteur de consommation d'énergie comprenant une roue. La roue est pourvue d'une marque significative et est en rotation à une vitesse correspondant à la consommation. Le capteur est capable de détecter le passage de la marque.

Le capteur est placé à l'intérieur du compteur, logé dans un support comprenant des moyens permettant sa fixation, par pincement élastique, à une partie existant à l'intérieur du compteur. Le capteur est maintenu à une distance fixe de la roue.

Cependant, le capteur est conçu pour être placé à l'intérieur du compteur. Le logement peu accessible rend malaisée l'opération d'installation ainsi que la maintenance ou le remplacement de ce dernier.

Enfin, tous les compteurs ne sont pas équipés d'une roue pourvue d'une marque. Pour ces derniers, le capteur proposé n'est pas utilisable.

Une deuxième solution est proposée dans le document FR 2 611 067 qui décrit un procédé pour relever des chiffres affichés sur des indicateurs numériques, notamment le cadran d'un compteur.

Ce procédé comprend les opérations suivantes :
- on forme une image des chiffres sur la surface d'un analyseur d'image ;
- on convertit les signaux vidéo en signaux binaires ;
- on compare ces signaux aux signaux binaires préalablement enregistrés des 10 chiffres décimaux ;
- on identifie les chiffres du cadran.

Ce procédé est certes adapté à des indicateurs numériques, mais il ne convient guère au cas d'un compteur dont le cadran montre la partie visible d'une série de roues graduées de 0 à 9.

En effet, le passage d'un chiffre au suivant lors du défilement d'une roue n'est pas instantané. Pendant ce laps de temps, le procédé ne permet pas de déterminer ce qui est affiché sur le cadran.

De plus, l'image du cadran entier est reconstituée à chaque capture d'image. C'est un procédé complexe dont la précision peut ne pas être justifiée, par exemple pour une utilisation généralisée aux compteurs des particuliers.

En outre, le dispositif cache l'ensemble des chiffres, il est donc nécessaire de retranscrire localement l'image à l'utilisateur par un système optique ou par un afficheur, ce qui rend le système complexe et coûteux.

Le but de l'invention est de proposer un procédé, un dispositif et un système permettant de relever à distance le nombre inscrit sur un compteur en évitant les inconvénients ci-dessus, notamment le coût et la complexité.

Un tel compteur est pourvu d'un cadran présentant une zone d'affichage sur laquelle on peut lire un nombre, représentant par exemple une consommation électrique.

Le principe de l'invention est de reconstituer le nombre inscrit sur le cadran par la seule détermination des incrémentations successives.

L'invention s'applique tout aussi bien à un compteur comprenant une série de roues graduées qu'à un compteur dont la zone d'affichage est à affichage numérique.

L'invention concerne selon un premier aspect un procédé pour déterminer à distance un nombre inscrit sur le cadran d'un compteur, notamment de consommation domestique, qui comprend les opérations suivantes :
- on capte l'image d'au moins une zone significative de la zone d'affichage, en général le chiffre de poids faible de facturation ;
- on analyse l'image ;
- on détermine s'il y a eu incrémentation du nombre inscrit sur la zone d'affichage ;
- en cas d'incrémentation, on commande l'émission d'une impulsion électrique ;
on transmet l'impulsion à des moyens de calcul et de stockage du nombre d'impulsions reçues de sorte qu'à partir du nombre d'impulsions calculées par des moyens de calcul et de stockage, on déduit le nombre inscrit sur la zone d'affichage.

On peut calculer le nombre inscrit sur la zone d'affichage à partir du nombre d'impulsions calculées par les moyens de calcul et de stockage et d'un nombre initial inscrit sur la zone d'affichage relevé au départ.

Pour chaque image captée :
- on calcule la probabilité, dite pourcentage de concordance, pour que l'image captée corresponde à un des chiffres de 0 à 9,
- on obtient dix pourcentages de concordance correspondant aux dix chiffres de 0 à 9,
- on compare le pourcentage de concordance à un pourcentage seuil prédéterminé,
- si le pourcentage de concordance est supérieur au pourcentage seuil, on considère qu'un chiffre affiché déterminé est le chiffre correspondant au pourcentage de concordance,
- on compare le chiffre affiché ainsi déterminé à l'avant dernier chiffre affiché déterminé.

Dans cette dernière étape, qui permet de déterminer une éventuelle incrémentation, on compare les deux derniers chiffres affichés déterminés.

Par ailleurs, la zone du cadran dont on capte les images doit être de taille suffisante pour l'étape de l'analyse d'images.

Selon un deuxième aspect, l'invention concerne un dispositif d'analyse et de commande pour la mise en oeuvre du procédé.

Le dispositif comprend des moyens de lecture d'au moins une zone significative du cadran. Ces moyens de lecture comprennent un capteur d'images et une lentille.

Le dispositif est également pourvu de moyens d'analyse d'images recevant les images provenant des moyens de lecture et permettant de détecter l'incrémentation du nombre inscrit.

Les moyens d'analyse peuvent alors commander des moyens d'émission d'une impulsion électrique de sorte que l'incrémentation entraîne l'émission d'une impulsion.

Les moyens d'émission peuvent être connectés à des moyens de calcul et de stockage du nombre d'impulsions reçues.

Le dispositif comprend un réseau de neurones. Le réseau possède un certain nombre d'entrées correspondant aux pixels de l'image, et dix sorties correspondant aux dix chiffres possibles.

Le réseau comprend plusieurs couches de neurones. Chaque neurone d'une couche est relié à tous les neurones d'une autre couche par des synapses c'est à dire une fonction de calcul possédant un coefficient.

Tous les coefficients ont été déterminés au préalable par apprentissage d'un grand nombre de chiffres enregistrés dans des situations de terrain différentes (chiffres inclinés, chiffres plus ou moins bien éclairés, chiffres de taille, de forme, de couleur différentes...).

A chaque image analysée par le réseau de neurones, les dix sorties fournissent les probabilités, pour que l'image traitée corresponde au chiffre de sortie ou pourcentage de concordance. On appelle ces probabilités pourcentages de concordance dans la suite.

On fixe un seuil de probabilité pour lequel on considère que le chiffre reconnu est exact.

Lorsque l'une des sorties dépasse le seuil, on compare le chiffre reconnu avec l'avant dernier chiffre affiché déterminé.

L'invention concerne, selon un troisième aspect, un système pour déterminer à distance un nombre inscrit sur le cadran d'un compteur.
Le système comprend un dispositif tel que précédemment décrit ainsi que les moyens de calcul et de stockage du nombre d'impulsions reçues et des moyens de télétransmission à un ordinateur extérieur.

L'impulsion peut être transmise, grâce à des moyens de sortie d'impulsions compris par le dispositif, aux moyens de calcul et de stockage du nombre d'impulsions reçues.
Ainsi, les moyens de calcul et de stockage du nombre d'impulsions reçues peuvent calculer le nombre inscrit sur le cadran.

Enfin, le système est relié à un ordinateur extérieur par l'intermédiaire de moyens de télétransmission.

Le système peut alors fournir, sur demande, à l'ordinateur le nombre inscrit sur le cadran représentant la consommation.

D'autres particularités et avantages de l'invention apparaîtront encore dans la description ci-après relative aux dessins annexés, donnés à titre d'exemples non limitatifs.

La figure 1 est une vue de face d'un compteur pourvu d'un dispositif pour relever à distance le nombre inscrit sur le cadran.

La figure 2 est une vue des éléments du dispositif d'analyse et de commande.

La figure 3 est un schéma de principe représentant les étapes du procédé.

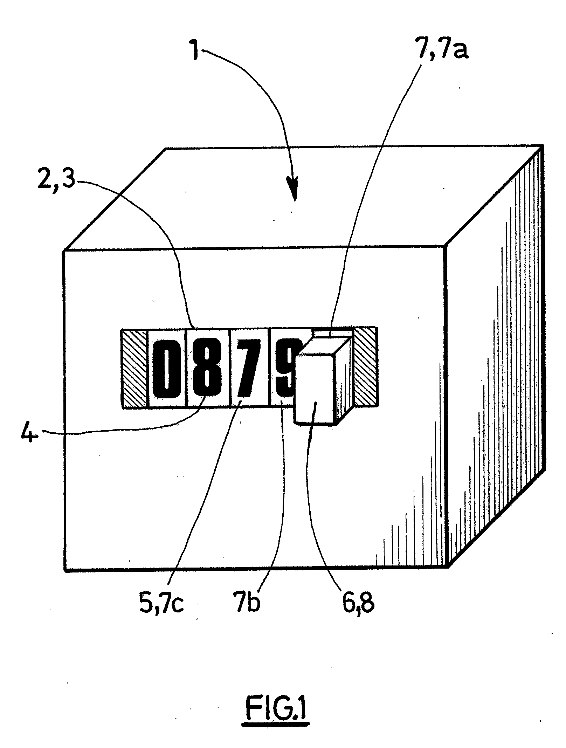

La figure 1 représente un compteur 1, par exemple un compteur de consommation domestique tel qu'un compteur d'eau, de gaz, d'électricité ou analogue comportant une zone d'affichage 2 indiquant un nombre inscrit 3 correspondant à la consommation.

Le nombre inscrit 3 est constitué de chiffres affichés 4.

On appelle 3ᵢ, le nombre initial inscrit 3 sur la zone d'affichage 2 au départ, par exemple à la mise en place du dispositif.

Selon une première réalisation possible, chaque chiffre affiché 4 est une graduation décimale visible portée par une roue graduée 5, le compteur étant pourvu d'autant de roues graduées que de puissances de dix prévues pour le nombre inscrit 3.

Les couleurs de la zone d'affichage 2 du compteur 1 sont généralement choisies de façon à ce que l'on puisse distinguer les chiffres affichés 4 de la surface de la roue 5 sur laquelle ils sont inscrits.

On peut, par exemple, avoir des chiffres affichés 4 blancs sur une surface de roue 5 noire.

La distinction peut se faire par tout autre moyen qu'une combinaison de couleurs tant que la distinction est possible.

Selon une deuxième réalisation possible, le compteur 1 peut être équipé d'un cadran numérique par exemple à cristaux liquides.

Un boîtier 8 contenant un dispositif 6 d'analyse et de commande est fixé sur la zone d'affichage 2 face à une zone significative 7 de la zone d'affichage 2.

Le boîtier 8 est pourvu de moyens de fixation non représentés permettant de le fixer sur le compteur 1 face à la zone d'affichage 2, tels que des moyens d'encliquetage, collage, vissage ou tout autre moyen.

Le boîtier 8 est généralement localisé sur le compteur 1 de façon à ce que le dispositif 6 permette la visualisation d'une zone 7a de la zone d'affichage 2 de défilement des unités.

Cependant, le réseau de neurones permet des erreurs de positionnement.

On peut également placer le boîtier 8 de façon à visualiser une zone 7b de défilement des dizaines et de même pour une zone 7c de défilement des centaines et pour les autres puissances de dix.

Le relevé effectué sera d'autant plus précis que la zone significative 7 choisie sera une zone de défilement d'une puissance de dix basse. Mais, il peut exister des applications pour lesquelles on ne choisira pas la zone 7a de défilement des unités.

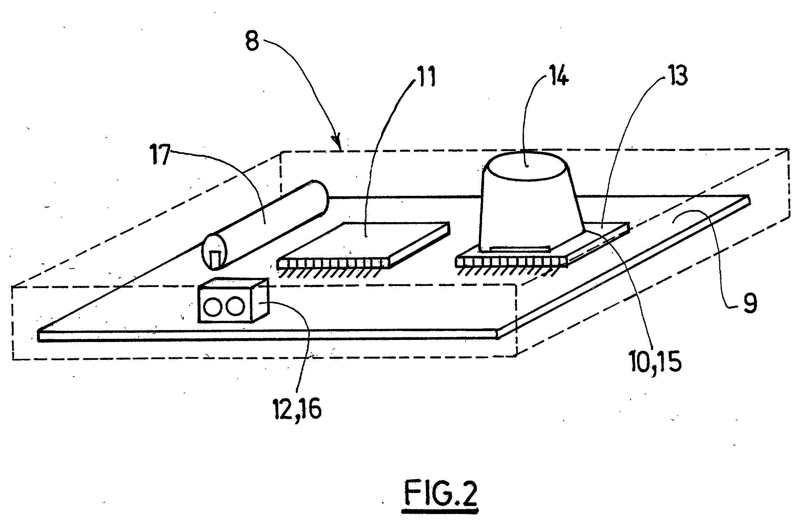

La figure 2 représente une vue des éléments compris dans le dispositif 6, et, en pointillés, le boîtier 8 contenant le dispositif 6. Le boîtier 8 permet de protéger les différents éléments du dispositif 6 contre l'entrée de poussières, d'installer facilement le dispositif 6 sur le compteur 1...

Le dispositif 6 comprend un circuit imprimé 9 sur lequel sont placés des moyens de lecture 10 d'au moins une zone significative 7 de la zone d'affichage 2, des moyens d'analyse 11 ainsi que des moyens d'émission 12 d'impulsions électriques.

Les moyens de lecture 10 comprennent un capteur d'images 13, une lentille 14 et un support de lentille 15 placé entre le capteur d'images 13 et la lentille 14.

Les moyens d'analyse 11 peuvent comprendre un réseau de neurones.

Les moyens d'analyse 11 et les moyens de lecture 10 peuvent être compris en un unique composant apte à la lecture et la reconnaissance de chiffre.

Les moyens d'émission 12 d'impulsions électriques peuvent comprendre un connecteur de sortie à impulsions 16 placé sur le circuit imprimé.

Sur le circuit imprimé 9, se trouve également une pile 17.

La pile 17, par exemple une pile au lithium, alimente les moyens de lecture 10 et les moyens d'analyse 11 de sorte que le dispositif 6 ne nécessite pas de source d'énergie externe.

La pile 17 est prévue pour fonctionner plusieurs années, par exemple sept ans.

Dans l'exemple de réalisation décrit, les différents éléments du dispositif sont connectés via le circuit imprimé 9. Toutefois, d'autres moyens de connexion sont possibles.

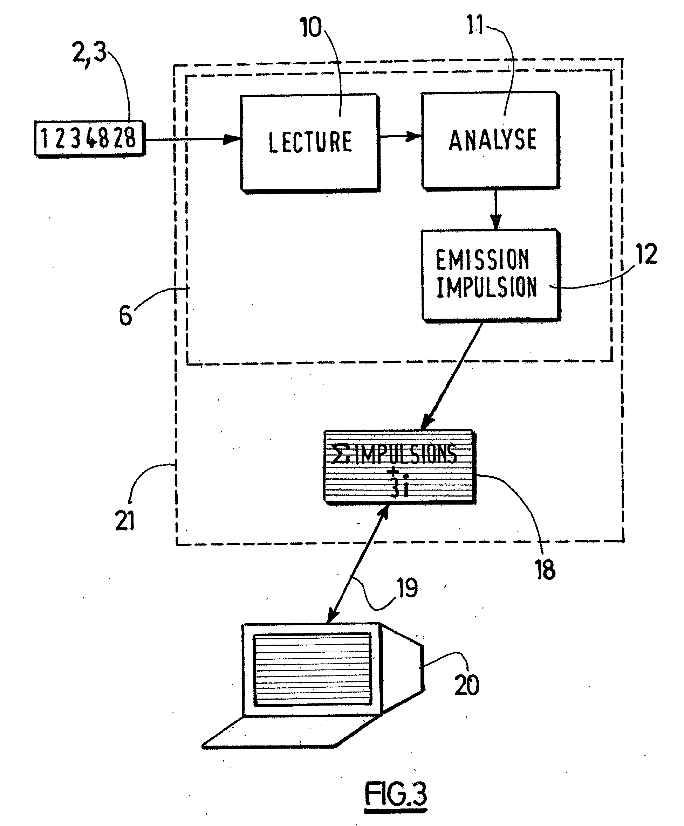

En référence aux figures 2 et 3, le dispositif 6 est relié par l'intermédiaire du connecteur de sortie d'impulsions 16 à des moyens 18 de calcul et de stockage du nombre d'impulsions reçues.

On se réfère maintenant à la figure 3 qui illustre les principales étapes du procédé ainsi que le système permettant de déterminer à distance le nombre inscrit sur la zone d'affichage 2, selon l'invention.

Le système 21 comprend le dispositif 6, les moyens 18 de calcul et de stockage du nombre d'impulsions reçues et des moyens de télétransmission 19 à un ordinateur extérieur 20.

Dans un autre mode de réalisation de l'invention, le stockage du nombre d'impulsions et le calcul du nombre inscrit 3 sont réalisés par deux appareils différents.

Dans un autre mode de réalisation, les moyens 18 de calcul et de stockage du nombre d'impulsions reçues sont placés à l'intérieur du boîtier 8.

On décrit à présent le procédé selon l'invention.

Une image d'une zone significative 7 de la zone d'affichage 2 est captée par les moyens de lecture 10.

Les moyens de lecture 10 captent généralement des images d'une taille supérieure à celle d'un chiffre affiché 4 de la zone d'affichage 2 et généralement de la taille de zone 7 correspondant à une puissance de dix (unités, dizaines, centaines...).

L'incrémentation du nombre inscrit 3 est équivalente au changement sur la zone d'affichage 2 d'un chiffre affiché 4 au chiffre affiché 4 suivant.

Dans un autre mode de réalisation, il est possible de ne capter qu'une partie du chiffre 4 ou encore plusieurs chiffres 4 à la fois.

Quel que soit le mode de réalisation, on capte une image assez large pour pouvoir déterminer le chiffre affiché 4 au moins une fois par passage du chiffre affiché 4 sur la zone d'affichage 2.

On règle régulièrement le contraste, car la luminosité ambiante peut changer, afin que l'image captée puisse être lue et donc que l'on puisse déterminer le chiffre affiché 4 au moins une fois par passage du chiffre affiché 4 sur la zone d'affichage 2.

La fréquence de capture des images est choisie en fonction de différents paramètres comme la plage de vitesses de défilement de la (des) roue(s) 5 sur laquelle on cherche à déterminer les chiffres 4, la consommation mais également du coût et des caractéristiques techniques des moyens de lecture 10 ou encore d'autres paramètres.

L'image est transmise aux moyens d'analyse 11.

Les moyens d'analyse 11 comprennent un réseau de neurones dont le rôle est de conduire toute l'étape d'analyse d'images.

Cette étape d'analyse a pour but de déterminer s'il y a eu incrémentation du nombre inscrit 3 sur la zone d'affichage 2 par rapport à la dernière image captée.

Pour ce faire, un réseau de neurones calcule la probabilité, dite pourcentage de concordance, pour que l'image captée corresponde à un des chiffres de 0 à 9.

Le réseau de neurones calcule donc dix pourcentages de concordance, simultanément.

Le réseau de neurones comprend dix sorties correspondant aux dix pourcentages de concordance calculés.

On compare alors chaque pourcentage de concordance à un pourcentage seuil prédéterminé. On peut par exemple fixé le pourcentage seuil à 90 %.

Lorsque la partie visible d'une roue 5, correspond à une zone située entre deux chiffres 4, on n'a typiquement aucun pourcentage de concordance supérieur au pourcentage seuil.

L'analyse peut alors reprendre avec une nouvelle image.

Lorsqu'un pourcentage de concordance est supérieur au pourcentage seuil, le chiffre 4 est déterminé de façon certaine.

Par exemple, supposons qu'un huit soit en train de disparaître et un neuf soit en train d'apparaître dans la zone 7 de la zone d'affichage 2. On est entre deux chiffres 4. Aucun chiffre ne correspond à ce qui est affiché dans la zone 7.

A cet instant, le dernier chiffre 4 à avoir été déterminé est un huit.

Au fur et à mesure que le neuf s'affiche dans la zone 7, le pourcentage de concordance correspondant au neuf augmente.

Il arrive un moment où le pourcentage de concordance correspondant au neuf égale ou dépasse le pourcentage seuil.

Dès lors le neuf est déterminé.

Puis arrive un moment où le pourcentage de concordance avec le neuf n'est plus supérieur au pourcentage seuil. Les dix pourcentages de concordance présentent alors des valeurs inférieures à la valeur du pourcentage seuil.

Enfin, chaque fois qu'un pourcentage de concordance dépasse le pourcentage seuil, on compare le chiffre affiché 4 ainsi déterminé à l'avant dernier chiffre 4 affiché déterminé .

S'ils sont identiques, il n'y a pas eu incrémentation.

S'ils sont différents, il y a eu incrémentation.

En cas d'incrémentation, les moyens d'analyse commandent l'émission d'une impulsion électrique.

L'impulsion est émise par le connecteur de sortie d'impulsions 16.

L'impulsion est alors transmise à des moyens 18 de calcul et de stockage d'un nombre d'impulsions reçues.

A partir du nombre d'impulsions calculé par les moyens 18 de calcul et de stockage et du nombre initial inscrit 3ᵢ sur la zone d'affichage 2 relevé au départ, on calcule le nombre inscrit 3 sur la zone d'affichage 2.
Dans un autre mode de réalisation, on calcule le nombre 3 inscrit sur la zone d'affichage 2 à chaque réception d'impulsion en ajoutant un au dernier nombre inscrit calculé.

Il est alors possible de transmettre le nombre 3 à un ordinateur extérieur 20.

Pour cela, on utilise des moyens des télétransmission 19 entre l'ordinateur extérieur 20 et le système 21, et plus particulièrement entre l'ordinateur extérieur 20 et les moyens 18 de calcul et de stockage du nombre d'impulsions reçues.

Les moyens de télétransmission 19 sont par exemple les lignes téléphoniques.

L'envoi du nombre 3 calculé peut être régulier ou faire suite à la réception d'un ordre venant de l'ordinateur extérieur 20.

L'ordinateur extérieur 20 peut, par exemple, être localisé dans un centre de facturation.

## Revendications

1. Procédé pour déterminer à distance un nombre inscrit (3) sur un cadran d'un compteur (1) tel qu'un compteur d'eau, de gaz, d'électricité ou analogue, ledit compteur (1) comprenant une zone d'affichage (2), **caractérisé par** les opérations suivantes :
- on capte l'image d'au moins une zone significative (7) de la zone d'affichage (2),
- on analyse l'image,
- on détermine s'il y a eu incrémentation du nombre inscrit (3) sur la zone d'affichage (2),
- en cas d'incrémentation, on commande l'émission d'une impulsion électrique,
- on transmet l'impulsion à des moyens (18) de calcul et de stockage d'un nombre d'impulsions reçues,
de sorte qu'à partir du nombre d'impulsions calculées par les moyens (18) de calcul et de stockage, on déduit le nombre inscrit (3) sur la zone d'affichage (2).

2. Procédé selon la revendication 1, **caractérisé en ce que** l'on calcule le nombre inscrit (3) sur la zone d'affichage (2) à partir du nombre d'impulsions calculées par les moyens (18) de calcul et de stockage et d'un nombre initial inscrit (3i) sur la zone d'affichage (2) relevé au départ.

3. Procédé selon l'une des revendications 1 à 2, **caractérisé en ce que** pour chaque image captée :
- on calcule la probabilité, dite pourcentage de concordance, pour que l'image captée corresponde à un des chiffres de 0 à 9,
- on obtient dix pourcentages de concordance correspondant aux dix chiffres de 0 à 9,
- on compare le pourcentage de concordance à un pourcentage seuil prédéterminé,
- si le pourcentage de concordance est supérieur au pourcentage seuil, on considère qu'un chiffre affiché (4) déterminé est le chiffre correspondant au pourcentage de concordance,
- on compare le chiffre affiché (4) ainsi déterminé à l'avant dernier chiffre affiché (4) déterminé.

4. Procédé selon la revendication 3, **caractérisé en ce que** l'on règle le contraste régulièrement de façon à pouvoir atteindre au moins fois le pourcentage seuil pour chaque chiffre affiché (4).

5. Procédé selon l'une quelconque des revendications 3 à 4, **caractérisé en ce que** l'on capte une image assez large pour pouvoir atteindre le pourcentage seuil.

6. Dispositif d'analyse d'images et de commande d'impulsions pour la mise en oeuvre du procédé selon l'une quelconque des revendications 1 à 5, **caractérisé en ce qu'**il comprend :
- des moyens de lecture (10) d'au moins une zone significative (7) de la zone d'affichage (2),
- des moyens d'analyse d'images (11) recevant les images provenant des moyens de lecture (10) et permettant de détecter l'incrémentation du nombre inscrit (3), commandant
- des moyens d'émission (12) d'une impulsion électrique de sorte que l'incrémentation entraîne l'émission d'une impulsion, les dits moyens d'émission (12) pouvant être connectés à des moyens de calcul et de stockage (18) du nombre d'impulsions reçues.

7. Dispositif selon la revendication 6, **caractérisé en ce que** les moyens de lecture (10) comprennent un capteur d'images (13) et une lentille (14).

8. Dispositif selon l'une quelconque des revendications 6 à 7, **caractérisé en ce que** les moyens d'analyse (11) comprennent un réseau de neurones.

9. Dispositif selon l'une quelconque des revendications 6 à 8, **caractérisé en ce qu'**il comprend une pile (17) alimentant les moyens de lecture (10) et les moyens d'analyse (11) de sorte que le dispositif (6) ne nécessite pas de source d'énergie externe.

10. Dispositif selon l'une quelconque des revendications 6 à 9, **caractérisé en ce qu'**il comprend des moyens permettant sa fixation sur le compteur (1).

11. Dispositif selon l'une quelconque des revendications 6 à 10, **caractérisé en ce qu'**il est localisé sur le compteur (1) de façon à visualiser la zone (7a) de la zone d'affichage (2) de défilement des unités.

12. Système pour déterminer à distance un nombre inscrit (3) sur le cadran (2) d'un compteur (1) tel qu'un compteur d'eau, de gaz, d'électricité ou analogue, **caractérisé en ce qu'**il comprend un dispositif (6) selon l'une des revendications 6 à 11, ainsi que des moyens de calcul et de stockage (18) du nombre d'impulsions reçues et des moyens de télétransmission (19) à un ordinateur extérieur (20).

13. Système selon la revendication 12, **caractérisé en ce que** les moyens de calcul et de stockage (18) du nombre d'impulsions reçues calcule le nombre inscrit (3) sur la zone d'affichage (2) à partir du nombre d'impulsions et du nombre initial inscrit (3i) sur la zone d'affichage (2) au départ.

14. Système selon la revendication 13, **caractérisé en ce que** les moyens de télétransmission (19) sont aptes à fournir sur demande de et à l'ordinateur extérieur (20) le nombre inscrit (3) sur la zone d'affichage.
